# EUROPÄISCHE PATENTSCHRIFT

(11) **EP 3 572 622 B1**
(45) Veröffentlichungstag und Bekanntmachung des Hinweises auf die Patenterteilung: **23.11.2022**
(21) Anmeldenummer: 19175531.3
(22) Anmeldetag: 21.05.2019
(51) Int. Cl.: F01D 5/14, F01D 9/04

(54) **TURBINENZWISCHENGEHÄUSE MIT SPEZIFISCH AUSGEBILDETER RINGRAUMKONTUR**
INTERMEDIATE TURBINE HOUSING WITH SPECIFICALLY SHAPED ANNULUS CONTOUR
CARTER INTERMÉDIAIRE DE TURBINE POURVU DE CONTOUR D'ESPACE ANNULAIRE À CONCEPTION SPÉCIFIQUE

(30) Priorität: 24.05.2018 DE 102018208151
(43) Veröffentlichungstag der Anmeldung: 27.11.2019
(73) Patentinhaber: MTU Aero Engines AG, 80995 München (DE)
(72) Erfinder: Brettschneider, Markus, 85757 Karlsfeld (DE); Lauer, Christoph, 80637 München (DE); Stanka, Rudolf, 84431 Rattenkirchen (DE)

(56) Entgegenhaltungen:
- DE-A1-102004 042 699
- US-A1- 2010 040 462
- US-A1- 2014 086 739

## Beschreibung

Die vorliegende Erfindung betrifft ein Turbinenzwischengehäuse für eine Gasturbine, insbesondere Fluggasturbine, mit einer radialen Innenwand, einer radialen Außenwand, wobei die Innenwand und die Außenwand einen von Heißgas durchströmten Ringraum begrenzen und wobei die Innenwand und die Außenwand eine jeweilige dem Ringraum zugewandte Kontur aufweisen, die bezogen auf einen axialen Längsschnitt durch das Turbinenzwischengehäuse entlang der Innenwand eine innere Ringraumkurve und entlang der Außenwand eine äußere Ringraumkurve beschreiben, und mit wenigstens einem Schaufelelement, das sich in Radialrichtung durch den Ringraum hindurch erstreckt und eine axiale Eintrittskante und eine axiale Austrittskante aufweist, wobei das Schaufelelement eine zwischen der Eintrittskante und der Austrittskante gemessene, auf die Außenwand bezogene äußere axiale Breite und eine zwischen der Eintrittskante und der Austrittskante gemessene, auf die Innenwand bezogene innere axiale Breite aufweist.

Richtungsangaben wie "Axial-" bzw. "axial", "Radial-" bzw. "radial" und "Umfangs-" sind grundsätzlich auf die Maschinenachse der Gasturbine bezogen zu verstehen, sofern sich aus dem Kontext nicht explizit oder implizit etwas anderes ergibt.

Das Schaufelelement eines solchen Turbinenzwischengehäuses kann eine umlenkende oder eine nicht umlenkende Schaufel sein. Dabei wird unter einer umlenkenden Schaufel ein Schaufelelement verstanden, das einen deutlichen Einfluss auf die Strömungsrichtung von durch den Ringraum strömendem Heißgas aufweist und nicht nur umströmt wird, ohne dass die Strömungsrichtung wesentlich beeinflusst wird. Üblicherweise dient zumindest ein Teil der entlang der Umfangsrichtung verteilt angeordneten Schaufelelemente dazu, tragende Strukturen, die sich von einem Nabenbereich zu einem Gehäusebereich einer Gasturbine durch den Ringraum hindurch erstrecken, strömungsgünstig zu umgeben und vor dem durchströmenden Heißgas zu schützen.

Ein Beispiel für die Ausgestaltung eines Ringraums eines Turbinenzwischengehäuses ist aus der US 2014/0086739 A1 bekannt. Weitere gattungsgemäße Turbinenzwischengehäuse sind auch aus der DE 10 2004 042699 A1 und der US 2010/040462 A1 bekannt.

Bei Turbinenzwischengehäusen, die üblicherweise zwischen zwei Turbinen eingesetzt werden, ist es angestrebt, die axiale Länge möglichst zu minimieren, um hierdurch Gewicht und

Bauraum einsparen zu können. Wird die axiale Länge eines Turbinenzwischengehäuses reduziert, weisen die Außenwand und die Innenwand einen steileren Verlauf auf. Dabei besteht die Gefahr, dass es zu Strömungsablösungen im Bereich der Außenwand oder der Innenwand kommen kann.

Die der Erfindung zu Grunde liegende Aufgabe wird darin gesehen, ein Turbinenzwischengehäuse anzugeben, bei dem eine minimale axial Länge realisierbar ist und die Gefahr von Strömungsabrissen entlang der den Ringraum begrenzenden Wände minimiert ist.

Zur Lösung dieser Aufgabe wir ein Turbinenzwischengehäuse mit den Merkmalen des Anspruchs 1 und eine Gasturbine mit einem solchen Turbinenzwischengehäuse nach Anspruch 5 vorgeschlagen. Weiterbildungen und mögliche Ausführungsformen sind in den abhängigen Ansprüchen enthalten.

Es wird somit ein Turbinenzwischengehäuse gemäß Anspruch 1 für eine Gasturbine, insbesondere Fluggasturbine, vorgeschlagen mit
einer radialen Innenwand;
einer radialen Außenwand;
wobei die Innenwand und die Außenwand einen von Heißgas durchströmten Ringraum begrenzen und wobei die Innenwand und die Außenwand eine jeweilige dem Ringraum zugewandte Kontur aufweisen, die bezogen auf einen axialen Längsschnitt durch das Turbinenzwischengehäuse entlang der Innenwand eine innere Ringraumkurve und entlang der Außenwand eine äußere Ringraumkurve beschreiben; und
wenigstens einem Schaufelelement, das sich in Radialrichtung durch den Ringraum hindurch erstreckt und eine axiale Eintrittskante und eine axiale Austrittskante aufweist, wobei das Schaufelelement eine zwischen der Eintrittskante und der Austrittskante gemessene, auf die Außenwand bezogene äußere axiale Breite und eine zwischen der Eintrittskante und der Austrittskante gemessene, auf die Innenwand bezogene innere axiale Breite aufweist. Dabei ist weiter vorgesehen, dass die äußere Ringraumkurve oder/und die innere Ringraumkurve wenigstens einen Kurvenabschnitt aufweist, der einen Punkt maximaler Steigung der betreffenden Ringraumkurve aufweist, wobei der Kurvenabschnitt bezogen auf die äußere axiale Breite oder/und auf die innere axiale Breite sich im Bereich der Eintrittskante oder der Austrittskante befindet und eine parallel zur Axialrichtung projizierte Länge aufweist, die bis zu 20% der betreffenden axialen Breite beträgt und wobei der Kurvenabschnitt den Durchstoßpunkt der Eintrittskante oder der Austrittskante durch die Außenwand oder die Innenwand schneidet.

Es hat sich gezeigt, dass durch das Vorsehen von Wendepunkten bzw. Punkten maximaler Steigung in den Bereichen der Einlasskante bzw. der Auslasskante eine im Hinblick auf eine verkürzte axiale Länge optimierte Ausgestaltung der Ringraumkurven ermöglicht wird. Dabei wird durch das Vorsehen der Wendepunkte bzw. der Punkte maximaler Steigung im Bereich der Schaufelkanten auch das Abreißen der Strömung entlang der Ringraumwände verhindert. Im Bereich der Eintrittskante bzw. der Austrittskante befindet sich also zumindest ein Wendepunkt der äußeren Ringraumkurve oder der inneren Ringraumkurve. Alternativ oder ergänzend befindet sich im Bereich der Eintrittskante bzw. der Austrittskante zumindest ein Punkt maximaler Steigung der äußeren Ringraumkurve oder inneren Ringraumkurve.

Als Wendepunkt einer Ringraumkurve wird im Übrigen derjenige Punkt entlang der Ringraumkurve verstanden, an dem sich die Krümmung der Ringraumkurve von konvex zu konkav oder umgekehrt ändert, wobei die Bezeichnungen konvex und konkav bezogen auf eine Nabe des Turbinenzwischengehäuses angegeben werden können.

Die projizierte Länge des Kurvenabschnitts kann einen vor der Eintrittskante oder der Austrittskante liegenden vorderen Abschnitt und einen nach der Eintrittskante oder des Austrittskante liegenden hinteren Abschnitt aufweisen, wobei der vordere Abschnitt und der hintere Abschnitt im Wesentlichen gleich lang sind. Anders ausgedrückt weisen der vordere Abschnitt und der hintere Abschnitt bezogen auf den Durchstoßpunkt der Eintrittskante bzw. Austrittskante durch die Innenwand bzw. die Außenwand gleiche Längen auf. Der vordere Abschnitt und der hintere Abschnitt weisen insbesondere eine Länge auf, die bis zu 10% der inneren bzw. äußeren axialen Breite des Schaufelelements beträgt.

Die äußere Ringraumkurve weist erfindungsgemäß einen Wendepunkt im Bereich der Eintrittskante und einen Wendepunkt im Bereich der Austrittskante auf. Ferner kann die innere Ringraumkurve einen Wendepunkt im Bereich der Eintrittskante und einen Wendepunkt im Bereich der Austrittskante aufweisen. Es ist also möglich, dass die Ringraumkurven so ausgebildet sind, dass ihre jeweiligen Wendepunkte, insbesondere alle Wendepunkte, nur im Bereich der Eintrittskante bzw. der Austrittskante vorgesehen sind, insbesondere in dem Bereich des entsprechenden Kurvenabschnitts mit der projizierten Länge von 20% der axialen Breite des Schaufelelements.

Der Punkt der maximalen Steigung der äußeren Ringraumkurve kann im Bereich der Eintrittskante oder im Bereich der Austrittskante vorgesehen sein. Alternativ oder ergänzend kann der Punkt der maximalen Steigung der inneren Ringraumkurve im Bereich der Austrittskante vorgesehen sein. Entsprechend kann ein Ringraum so gestaltet sein, dass sich seine Punkte maximaler Steigung an drei Stellen befinden, die sich alle im Beriech der Eintrittskante bzw. der Austrittskante befinden. Dabei weist die innere Ringraumkurve insbesondere bei der Eintrittskante keinen Punkt maximaler Steigung auf.

Die Erfindung betrifft auch eine Gasturbine, insbesondere Fluggasturbine, mit wenigstens zwei aufeinanderfolgenden Turbinen, insbesondere einer Hochdruckturbine und einer Niederdruckturbine oder insbesondere mit einer Hochdruckturbine, einer Mitteldruckturbine und einer Niederdruckturbine, wobei zwischen zwei aufeinanderfolgenden Turbinen, insbesondere zwischen der Hochdruckturbine und der nachfolgenden Niederdruckturbine oder Mitteldruckturbine, ein oben beschriebenes eingebaut ist, derart dass aus der einen Turbine ausströmendes Heißgas durch den Ringraum zur folgenden Turbine geleitet wird.

Nachfolgend wird die Erfindung unter Bezugnahme auf die anliegenden Figuren beispielhaft und nicht einschränkend beschrieben.
Fig. 1 zeigt in einer vereinfachten schematischen Darstellung ein Prinzipbild einer Fluggasturbine.
Fig. 2 zeigt in einer vereinfachten und schematischen Schnittdarstellung einen Ringraum eines Turbinenzwischengehäuses.
Fig. 3 zeigt in einer vereinfachten und schematischen Darstellung die Ringraumkurven des Ringraums des erfindungsgemässen Turbinenzwischengehäuses der Figur 2.

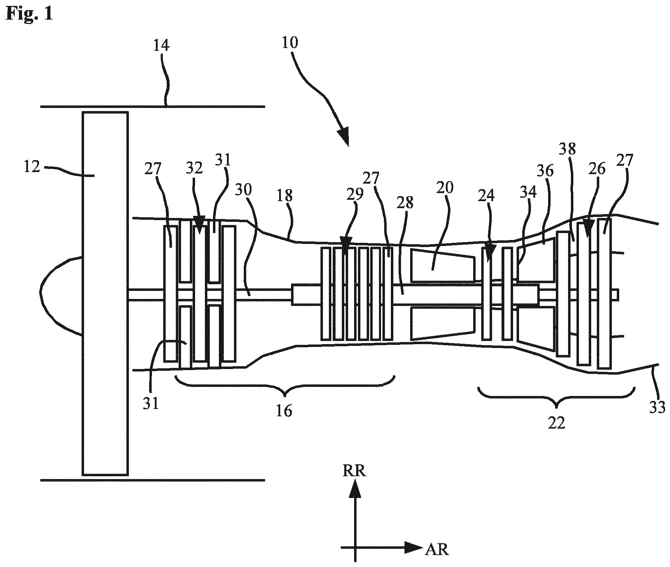

Fig. 1 zeigt schematisch und vereinfacht eine Fluggasturbine 10, die rein beispielhaft als Mantelstromtriebwerk illustriert ist. Die Gasturbine 10 umfasst einen Fan 12, der von einem angedeuteten Mantel 14 umgeben ist. In Axialrichtung AR der Gasturbine 10 schließt sich an den Fan 12 ein Verdichter 16 an, der in einem angedeuteten inneren Gehäuse 18 aufgenommen ist und einstufig oder mehrstufig ausgebildet sein kann. An den Verdichter 16 schließt sich die Brennkammer 20 an. Aus der Brennkammer ausströmendes heißes Abgas strömt men ist und einstufig oder mehrstufig ausgebildet sein kann. An den Verdichter 16 schließt sich die Brennkammer 20 an. Aus der Brennkammer ausströmendes heißes Abgas strömt dann durch die sich anschließende Turbine 22, die einstufig oder mehrstufig ausgebildet sein kann. Im vorliegenden Beispiel umfasst die Turbine 22 eine Hochdruckturbine 24 und eine Niederdruckturbine 26. Eine Hohlwelle 28 verbindet die Hochdruckturbine 24 mit dem Verdichter 16, insbesondere einem Hochdruckverdichter 29, so dass diese gemeinsam angetrieben bzw. gedreht werden. Eine in Radialrichtung RR der Turbine weitere innen liegende Welle 30 verbindet die Niederdruckturbine 26 mit dem Fan 12 und mit einem hier Niederdruckverdichter 32, so dass diese gemeinsam angetrieben bzw. gedreht werden. An die Turbine 22 schließt sich ein hier nur angedeutetes Austrittsgehäuse 33 an.

Im dargestellten Beispiel einer Fluggasturbine 10 ist zwischen der Hochdruckturbine 24 und der Niederdruckturbine 26 ein Turbinenzwischengehäuse 34 angeordnet, das um die Wellen 28, 30 angeordnet ist. In seinem radial äußeren Bereich 36 wird das Turbinenzwischengehäuse 34 von heißen Abgasen aus der Hochdruckturbine 24 durchströmt. Das heiße Abgas gelangt dann in einen Ringraum 38 der Niederdruckturbine 26. Von den Verdichtern 28, 32 und den Turbinen 24, 26 sind beispielhaft Laufschaufelkränze 27 dargestellt. Üblicherweise vorhandene Leitschaufelkränze 31 sind aus Gründen der Übersicht beispielhaft nur bei dem Verdichter 32 dargestellt.

Die nachfolgende Beschreibung einer Ausführungsform der Erfindung bezieht sich insbesondere auf das Turbinenzwischengehäuse 34 und den darin ausgebildeten Ringraum 38.

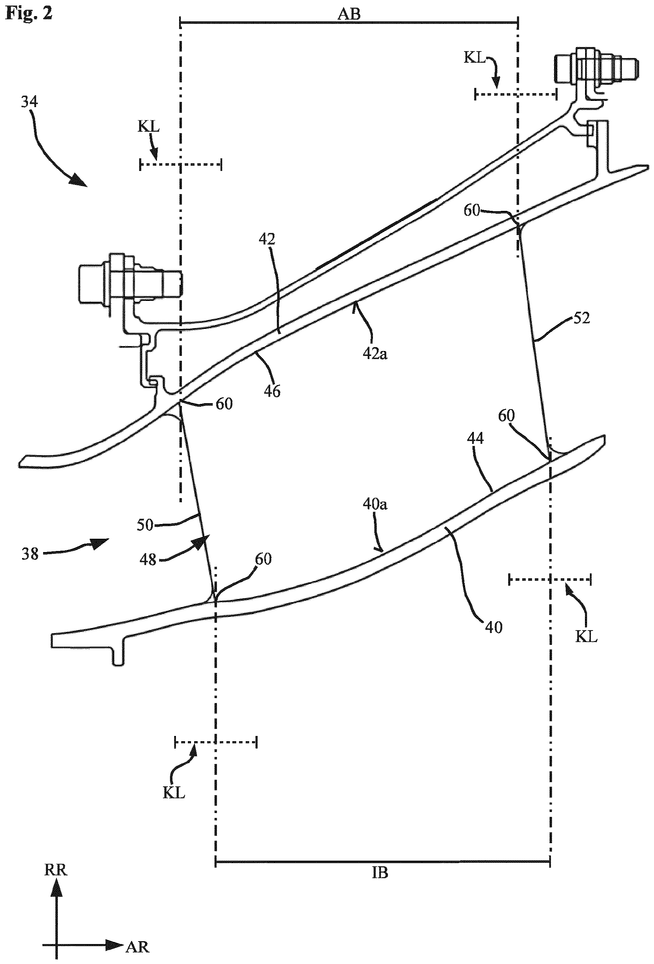

Figur 2 zeigt einen Längsschnitt durch den Ringraum 38 eines Turbinenzwischengehäuses 34. Die Schnittebene wird durch die Axialrichtung AR und die Radialrichtung RR aufgespannt. Das Turbinenzwischengehäuse 34 umfasst eine radialen Innenwand 40 und eine radialen Außenwand 42. Dabei begrenzen die Innenwand 40 und die Außenwand 42 den von Heißgas durchströmten Ringraum 38. Die Innenwand 40 und die Außenwand 42 weisen eine jeweilige dem Ringraum 38 zugewandte Kontur 40a, 42a auf. Die beiden Konturen 40a, 42a beschreiben bezogen auf den axialen Längsschnitt durch das Turbinenzwischengehäuse 34 entlang der Innenwand 40 eine innere Ringraumkurve 44 und entlang der Außenwand 42 eine äußere Ringraumkurve 46.

In der Figur 2 ist ferner ein Schaufelelement 48 ersichtlich, das sich in Radialrichtung RR durch den Ringraum 38 hindurch erstreckt. Das Schaufelelement 48 weist eine axiale Einäußere axiale Breite AB und eine zwischen der Eintrittskante 50 und der Austrittskante 52 gemessene, auf die Innenwand 40 bezogene innere axiale Breite IB des Schaufelelements 48 dargestellt. Es wird darauf hingewiesen, dass entlang der Umfangsrichtung mehrere Schaufelelemente 48 an dem Turbinenzwischengehäuse vorgesehen sind.

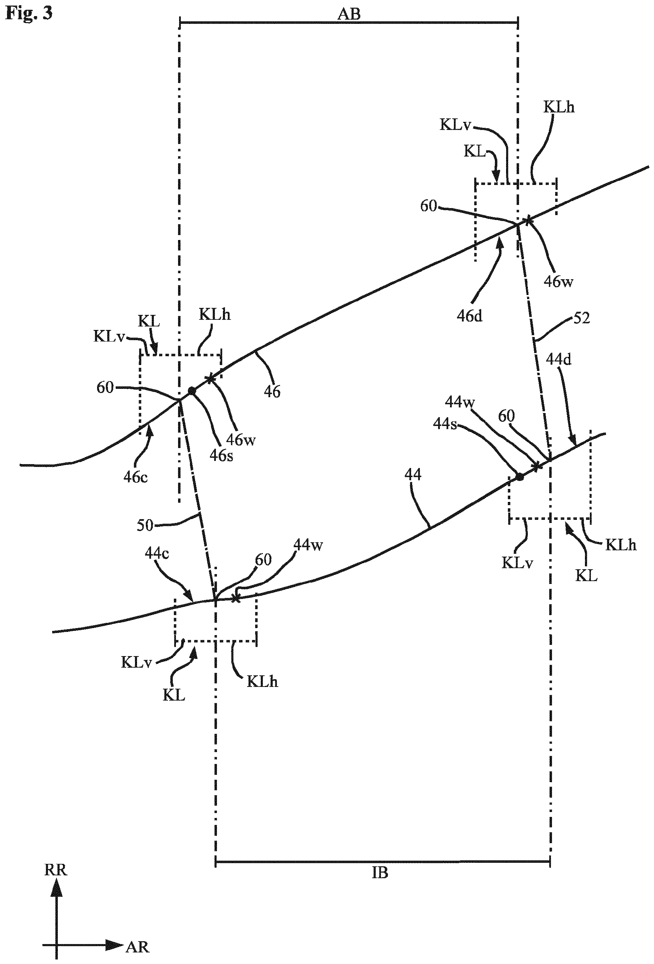

In Figur 3 sind die innere Ringraumkurve 44 und die äußere Ringraumkurve 46 als einzelene Lininen dargestellt. Ferner sind mittels der strichpunktierten Linien der die innere axiale Breite IB und die äußere axiale Breite AB des Schaufelelements 48 dargestellt, wie dies aus der Figur 2 bereits bekannt ist.

Bei der Ausgestaltung der Ringraumkonturen 42a, 44a, weisen die äußere Ringraumkurve 46 oder/und die innere Ringraumkurve 44 wenigstens einen Kurvenabschnitt 44c, 44d, 46c, 46d aufweist, der einen Wendepunkt 44w, 46w der betreffenden Ringraumkurve 44, 46 aufweist. Alternativ oder ergänzend kann der Kurvenabschnitt einen Punkt maximaler Steigung 44s, 46s der betreffenden Ringraumkurve 44, 46 aufweisen. Dabei ist der Kurvenabschnitt 44c, 44d, 46c, 46d bezogen auf die äußere axiale Breite AB oder/ auf die innere axiale Breite IB im Bereich der Eintrittskante 50 oder der Austrittskante 52 angeordnet. Ferner weist der Kurvenabschnitt 44c, 44d, 46c, 46f eine parallel zur Axialrichtung AR projizierte Länge KL auf, die bis zu 20% der betreffenden axialen Breite AB bzw. IB beträgt. Dabei schneidet der betreffende Kurvenabschnitt 44c, 44d, 46c, 46d einen Durchstoßpunkt 60 der Eintrittskante 50 oder der Austrittskante 52 durch die radiale Außenwand 42 oder die radiale Innenwand 40.

Die projizierte Länge KL des betreffenden Kurvenabschnitts 44c, 44d, 46c, 46d kann einen vor der Eintrittskante 50 oder der Austrittskante 52 liegenden vorderen Abschnitt KLv und einen nach der Eintrittskante 50 oder des Austrittskante 52 liegenden hinteren Abschnitt KLh aufweisen, wobei der vordere Abschnitt KLv und der hintere Abschnitt KLh im Wesentlichen gleich lang sind. Mit anderen Worten befinden sich Wendepunkte 44w, 46w oder/und Punkte maximaler Steigung 44s, 46s innerhalb eines Bereichs, der maximal 10% der betreffenden axialen Breite AB bzw. IB an der relevanten Position (gehäuseseitig oder nabenseitig) von dem jeweiligen Durchstoßpunkt 60 entfernt ist.

Wie aus der Darstellung der Figur 3 ersichtlich, können Wendepunkte 44w, 46w sowohl im Bereich der Eintrittskante 50 als auch im Bereich der Austrittskante 52 gleichzeitig vorgesehen sein. Es wird allerdings darauf hingewiesen, dass es auch denkbar ist, dass in weniger als Wie aus der Darstellung der Figur 3 ersichtlich, können Wendepunkte 44w, 46w sowohl im Bereich der Eintrittskante 50 als auch im Bereich der Austrittskante 52 gleichzeitig vorgesehen sein. Es wird allerdings darauf hingewiesen, dass es auch denkbar ist, dass in weniger als den dargestellten vier Kurvenabschnitten 44c, 44d, 46c, 46d ein Wendepunkt 44w, 46w vorgesehen sein kann. Insbesondere kann ein solcher Wendepunkt auch nur in einem einzigen der Kurvenabschnitte 44c, 44d, 46c, 46d angeordnet sein. Dies gilt im Übrigen genauso für die Punkte maximaler Steigung 44s, 46s. Dabei wird allerdings darauf hingewiesen, dass im Kurvenabschnitt 44c üblicherweise kein Punkt maximaler Steigung 44s der inneren Ringraumkurve 44 liegt.

### Bezugszeichenliste

- 10: Fluggasturbine
- 12: Fan
- 14: Mantel
- 16: Verdichter
- 18: inneres Gehäuse
- 20: Brennkammer
- 22: Turbine
- 24: Hochdruckturbine
- 26: Niederdruckturbine
- 27: Laufschaufelkranz
- 28: Hohlwelle
- 29: Hochdruckverdichter
- 30: Welle
- 31: Leitschaufelkranz
- 32: Niederdruckverdichter
- 33: Austrittsgehäuse
- 34: Turbinenzwischengehäuse
- 36: äußerer Bereich
- 38: Ringraum
- 40: radiale Innenwand
- 40a: Kontur der radialen Innenwand
- 42: radiale Außenwand
- 42a: Kontur der radialen Außenwand
- 44: innere Ringraumkurve
- 44c, 44d: Kurvenabschnitt
- 44s: Punkt maximaler Steigung
- 44w: Wendepunkt
- 46: äußere Ringraumkurve
- 46c, 46d: Kurvenabschnitt
- 46s: Punkt maximaler Steigung
- 46w: Wendepunkt
- 48: Schaufelelement
- 50: Eintrittskante
- 52: Austrittskante
- 60: Durchstoßpunkt

- AR: Axialrichtung
- KL: projizierte Länge Kurvenabschnitt
- KLh: hinterer Abschnitt
- KLv: vorderer Abschnitt
- RR: Radialrichtung

## Patentansprüche

1. Turbinenzwischengehäuse für eine Gasturbine, insbesondere Fluggasturbine, mit
einer radialen Innenwand (40);
einer radialen Außenwand (42) ;
wobei die Innenwand (40) und die Außenwand (42) einen von Heißgas durchströmten Ringraum (38) begrenzen und wobei die Innenwand (40) und die Außenwand (42) eine jeweilige dem Ringraum (38) zugewandte Kontur (40a, 42a) aufweisen, die bezogen auf einen axialen Längsschnitt durch das Turbinenzwischengehäuse (34) entlang der Innenwand (40) eine innere Ringraumkurve (44) und entlang der Außenwand (42) eine äußere Ringraumkurve (46) beschreiben;
wenigstens einem Schaufelelement (48), das sich in Radialrichtung (RR) durch den Ringraum (38) hindurch erstreckt und eine axiale Eintrittskante (50) und eine axiale Austrittskante (52) aufweist, wobei das Schaufelelement (48) eine zwischen der Eintrittskante (50) und der Austrittskante (52) gemessene, auf die Außenwand (42) bezogene äußere axiale Breite (AB) und eine zwischen der Eintrittskante (50) und der Austrittskante (52) gemessene, auf die Innenwand (40) bezogene innere axiale Breite (IB) aufweist,
wobei die äußere Ringraumkurve (46) oder/und die innere Ringraumkurve (44) wenigstens einen Kurvenabschnitt (44c, 44d, 46c, 46d) aufweist, der einen Punkt maximaler Steigung (44s, 46s) der betreffenden Ringraumkurve (44, 46) aufweist, wobei der Kurvenabschnitt (44c, 44d, 46c, 46d) bezogen auf die äußere axiale Breite (AB) oder/und auf die innere axiale Breite (IB) sich im Bereich der Eintrittskante (50) oder der Austrittskante (52) befindet und wobei der Kurvenabschnitt (44c, 44d, 46c, 46d) den Durchstoßpunkt (60) der Eintrittskante (50) oder der Austrittskante (52) durch die Außenwand (42) oder die Innenwand (40) schneidet,
**dadurch gekennzeichnet, dass**, der Kurvenabschnitt (44c, 44d, 46c, 46d) eine parallel zur Axialrichtung (AR) projizierte Länge (KL) aufweist, die bis zu 20% der betreffenden axialen Breite (AB, IB) beträgt und die äußere Ringraumkurve (46) einen Wendepunkt (46w) im Bereich der Eintrittskante (50) und einen Wendepunkt (46w) im Bereich der Austrittskante (52) aufweist.

2. Turbinenzwischengehäuse nach Anspruch 1, **dadurch gekennzeichnet, dass** die projizierte Länge (KL) des Kurvenabschnitts (44c, 44d, 46c, 46d) einen vor der Eintrittskante (50) oder der Austrittskante (52) liegenden vorderen Abschnitt (KLv) und einen nach der Eintrittskante (50) oder des Austrittskante (52) liegenden hinteren Abschnitt (KLh) aufweist, wobei der vordere Abschnitt (KLv) und der hintere Abschnitt (KLh) im Wesentlichen gleich lang sind, und/oder dass die äußere Ringraumkurve (46) oder/und die innere Ringraumkurve (44) wenigstens einen Kurvenabschnitt (44c, 44d, 46c, 46d) aufweist, der einen Wendepunkt (44w, 46w) der betreffenden Ringraumkurve (44, 46) aufweist, wobei der Kurvenabschnitt (44c, 44d, 46c, 46d) bezogen auf die äußere axiale Breite (AB) oder/und auf die innere axiale Breite (IB) sich im Bereich der Eintrittskante (50) oder der Austrittskante (52) befindet und eine parallel zur Axialrichtung (AR) projizierte Länge (KL) aufweist, die bis zu 20% der betreffenden axialen Breite (AB, IB) beträgt und wobei der Kurvenabschnitt (44c, 44d, 46c, 46d) den Durchstoßpunkt (60) der Eintrittskante (50) oder der Austrittskante (52) durch die Außenwand (42) oder die Innenwand (40) schneidet.

3. Turbinenzwischengehäuse nach einem der vorhergehenden Ansprüche, **dadurch gekennzeichnet, dass** die innere Ringraumkurve (44) einen Wendepunkt (44w) im Bereich der Eintrittskante (50) und einen Wendepunkt (44w) im Bereich der Austrittskante (52) aufweist.

4. Turbinenzwischengehäuse nach einem der vorhergehenden Ansprüche, **dadurch gekennzeichnet, dass** der Punkt der maximalen Steigung (46s) der äußeren Ringraumkurve (46) im Bereich der Eintrittskante (50) oder im Bereich der Austrittskante (52) vorgesehen ist, und/oder dass der Punkt der maximalen Steigung (44s) der inneren Ringraumkurve (44) im Bereich der Austrittskante (52) vorgesehen ist.

5. Gasturbine, insbesondere Fluggasturbine, mit wenigstens zwei aufeinanderfolgenden Turbinen (24, 26), insbesondere einer Hochdruckturbine und einer Niederdruckturbine oder insbesondere mit einer Hochdruckturbine, einer Mitteldruckturbine und einer Niederdruckturbine, wobei zwischen zwei aufeinanderfolgenden Turbinen (24, 26) ein Turbinenzwischengehäuse (34) nach einem der vorhergehenden Ansprüche eingebaut ist, derart dass aus der einen Turbine (24) ausströmendes Heißgas durch den Ringraum (38) zur folgenden Turbine (26) geleitet wird.

## Claims

1. Intermediate turbine housing for a gas turbine, in particular an aircraft gas turbine, comprising
a radial inner wall (40);
a radial outer wall (42);
the inner wall (40) and the outer wall (42) delimiting an annular space (38) through which hot gas flows, and the inner wall (40) and the outer wall (42) each having contours (40a, 42a) which face the annular space (38) and, relative to an axial longitudinal section through the intermediate turbine housing (34), describe an inner annular space curve (44) along the inner wall (40) and an outer annular space curve (46) along the outer wall (42);
at least one blade element (48) which extends through the annular space (38) in the radial direction (RR) and has an axial leading edge (50) and an axial trailing edge (52), the blade element (48) having an outer axial width (AB) which is measured between the leading edge (50) and the trailing edge (52) and related to the outer wall (42) and an inner axial width (IB) which is measured between the leading edge (50) and the trailing edge (52) and related to the inner wall (40),
the outer annular space curve (46) and/or the inner annular space curve (44) having at least one curved portion (44c, 44d, 46c, 46d) which has a point of maximum gradient (44s, 46s) of the relevant annular space curve (44, 46), the curved portion (44c, 44d, 46c, 46d) being located in the region of the leading edge (50) or the trailing edge (52) relative to the outer axial width (AB) and/or the inner axial width (IB), and the curved portion (44c, 44d, 46c, 46d) intersecting the penetration point (60) of the leading edge (50) or the trailing edge (52) through the outer wall (42) or the inner wall (40),
**characterized in that** the curved portion (44c, 44d, 46c, 46d) has a length (KL) which is projected in parallel with the axial direction (AR) and is up to 20% of the relevant axial width (AB, IB), and the outer annular space curve (46) has a turning point (46w) in the region of the leading edge (50) and a turning point (46w) in the region of the trailing edge (52).

2. Intermediate turbine housing according to claim 1, **characterized in that** the projected length (KL) of the curved portion (44c, 44d, 46c, 46d) has a front portion (KLv) which is in front of the leading edge (50) or the trailing edge (52) and a rear portion (KLh) which is after the leading edge (50) or the trailing edge (52), the front portion (KLv) and the rear portion (KLh) being substantially the same length, and/or **in that** the outer annular space curve (46) and/or the inner annular space curve (44) has at least one curved portion (44c, 44d, 46c, 46d) which has a turning point (44w, 46w) of the relevant annular space curve (44, 46), the curved portion (44c, 44d, 46c, 46d) being located in the region of the leading edge (50) or the trailing edge (52) relative to the outer axial width (AB) and/or to the inner axial width (IB) and having a length (KL) which is projected in parallel with the axial direction (AR) and is up to 20% of the relevant axial width (AB, IB), and the curved portion (44c, 44d, 46c, 46d) intersecting the penetration point (60) of the leading edge (50) or the trailing edge (52) through the outer wall (42) or the inner wall (40).

3. Intermediate turbine housing according to either of the preceding claims, **characterized in that** the inner annular space curve (44) has a turning point (44w) in the region of the leading edge (50) and a turning point (44w) in the region of the trailing edge (52).

4. Intermediate turbine housing according to any of the preceding claims, **characterized in that** the point of maximum gradient (46s) of the outer annular space curve (46) is provided in the region of the leading edge (50) or in the region of the trailing edge (52), and/or **in that** the point of the maximum gradient (44s) of the inner annular space curve (44) is provided in the region of the trailing edge (52).

5. Gas turbine, in particular an aircraft gas turbine, comprising at least two consecutive turbines (24, 26), in particular a high-pressure turbine and a low-pressure turbine or in particular comprising a high-pressure turbine, a medium-pressure turbine and a low-pressure turbine, wherein an intermediate turbine housing (34) according to any of the preceding claims is installed between two consecutive turbines (24, 26) such that hot gas flowing out of one turbine (24) is conducted through the annular space (38) to the following turbine (26).

## Revendications

1. Carter intermédiaire de turbine pour une turbine à gaz, en particulier une turbine à gaz d'aéronef, comportant
une paroi interne (40) radiale ;
une paroi externe (42) radiale ;
dans lequel la paroi interne (40) et la paroi externe (42) délimitent un espace annulaire (38) traversé par du gaz chaud et dans lequel la paroi interne (40) et la paroi externe (42) comportent un contour (40a, 42a) respectif faisant face à l'espace annulaire (38), lequel décrit, par rapport à une coupe longitudinale axiale à travers le carter intermédiaire de turbine (34), une courbe d'espace annulaire (44) intérieure le long de la paroi interne (40) et une courbe d'espace annulaire (46) extérieure le long de la paroi externe (42) ;
au moins un élément d'aube (48), lequel s'étend à travers l'espace annulaire (38) dans la direction radiale (RR) et comporte un bord d'attaque (50) axial et un bord de fuite (52) axial, dans lequel l'élément d'aube (48) présente une largeur axiale (AB) extérieure mesurée entre le bord d'attaque (50) et le bord de fuite (52) par rapport à la paroi externe (42) et une largeur axiale (IB) intérieure mesurée entre le bord d'attaque (50) et le bord de fuite (52) par rapport à la paroi interne (40),
dans lequel la courbe d'espace annulaire (46) extérieure et/ou la courbe d'espace annulaire (44) intérieure comportent au moins une section de courbe (44c, 44d, 46c, 46d), laquelle présente un point de pente maximale (44s, 46s) de la courbe d'espace annulaire (44, 46) concernée, dans lequel la section de courbe (44c, 44d, 46c, 46d) se trouve, par rapport à la largeur axiale (AB) extérieure et/ou la largeur axiale (IB) intérieure, dans la zone du bord d'attaque (50) ou du bord de fuite (52) et dans lequel la section de courbe (44c, 44d, 46c, 46d) coupe le point de percée (60) du bord d'attaque (50) ou du bord de fuite (52) à travers la paroi externe (42) ou la paroi interne (40), **caractérisé en ce que** la section de courbe (44c, 44d, 46c, 46d) présente une longueur projetée (KL) parallèle à la direction axiale (AR), laquelle atteigne jusqu'à 20 % de la largeur axiale (AB, IB) concernée et la courbe d'espace annulaire (46) extérieure présente un point d'inflexion (46w) dans la zone du bord d'attaque (50) et un point d'inflexion (46w) dans la zone du bord de fuite (52).

2. Carter intermédiaire de turbine selon la revendication 1, **caractérisé en ce que** la longueur projetée (KL) de la section de courbe (44c, 44d, 46c, 46d) comporte une section avant (KLv) située devant le bord d'attaque (50) ou le bord de fuite (52) et une section arrière (KLh) située derrière le bord d'attaque (50) ou le bord de fuite (52), dans lequel la section avant (KLv) et la section arrière (KLh) sont sensiblement de la même longueur, et/ou que la courbe d'espace annulaire (46) extérieure et/ou la courbe d'espace annulaire (44) intérieure comportent au moins une section de courbe (44c, 44d, 46c, 46d), laquelle présente un point d'inflexion (44w, 46w) de la courbe d'espace annulaire (44, 46) concernée, dans lequel la section de courbe (44c, 44d, 46c, 46d) se trouve dans la zone du bord d'attaque (50) ou du bord de fuite (52) par rapport à la largeur axiale (AB) extérieure et/ou la largeur axiale (IB) intérieure et présente une longueur projetée (KL) parallèle à la direction axiale (AR) et atteignant jusqu'à 20 % de la largeur axiale (AB, IB) concernée et dans lequel la section de courbe (44c, 44d, 46c, 46d) coupe le point de percée (60) du bord d'attaque (50) ou du bord de fuite (52) à travers la paroi externe (42) ou la paroi interne (40).

3. Carter intermédiaire de turbine selon l'une quelconque des revendications précédentes, **caractérisé en ce que** la courbe d'espace annulaire (44) intérieure présente un point d'inflexion (44w) dans la zone du bord d'attaque (50) et un point d'inflexion (44w) dans la zone du bord de fuite (52).

4. Carter intermédiaire de turbine selon l'une quelconque des revendications précédentes, **caractérisé en ce que** le point de la pente maximale (46s) de la courbe d'espace annulaire (46) extérieure est situé dans la zone du bord d'attaque (50) ou dans la zone du bord de fuite (52), et/ou que le point de la pente maximale (44s) de la courbe d'espace annulaire (44) intérieure est situé dans la zone du bord de fuite (52).

5. Turbine à gaz, en particulier turbine à gaz d'aéronef, comportant au moins deux turbines (24, 26) se succédant, en particulier une turbine haute pression et une turbine basse pression ou, en particulier comportant une turbine haute pression, une turbine moyenne pression et une turbine basse pression, dans laquelle un carter intermédiaire de turbine (34) selon l'une quelconque des revendications précédentes est installé entre deux turbines (24, 26) se succédant de telle sorte que du gaz chaud sortant d'une turbine (24) est guidé à travers l'espace annulaire (38) jusqu'à la turbine (26) successive.
